# EUROPEAN PATENT SPECIFICATION

(11) **EP 3 012 030 B1**
(45) Date of publication and mention of the grant of the patent: **13.12.2017**
(21) Application number: 15190751.6
(22) Date of filing: 21.10.2015
(51) Int. Cl.: B05B 13/04, B08B 9/023, F16L 58/18, B05B 15/04, B05B 15/08, F16L 59/20

(54) **A MACHINE FOR SPRAYING A SECTION OF PIPELINE**
MASCHINE ZUM SPRÜHEN EINES ABSCHNITTS EINER ROHRLEITUNG
MACHINE DE PULVÉRISATION D'UNE SECTION DE PIPELINE

(30) Priority: 22.10.2014 GB 201418785
(43) Date of publication of application: 27.04.2016
(73) Proprietor: Pipeline Induction Heat Limited, Burnley BB11 5SW (GB)
(72) Inventor: Foat, Kristian, South Warrington, Cheshire WA4 5NJ (GB); George, Michael, Burnley, lancashire BB10 3SQ (GB)
(74) Representative: SBD IPAdmin

(56) References cited:
- US-A- 5 136 969
- US-A- 5 372 154
- US-A- 5 615 696
- US-A1- 2013 340 794

## Description

The present invention relates to a machine for spraying a section of pipeline with air and water and a process for spraying a section of pipeline with air and water.

Oil, gas and other pipelines are typically formed from multiple lengths of individual steel pipe sections that are welded together end-to-end as they are being laid. As used herein, a section of pipeline is any length of a pipeline construction whilst a pipe section is what is welded together to form the pipeline construction. To prevent corrosion or other damage to the pipe sections occurring both from the environment and during transportation, and to reduce heat loss of fluids transported by pipelines, the pipe sections are coated with one or more protective and/or insulation layers. The pipe sections are usually externally coated at a factory remote from the location in which they are to be laid. This is often referred to as factory-applied coating and it is generally more cost effective than coating pipe sections on site where they are laid. At the factory, the coating is applied to the outside of the pipe sections whereupon a short length of approximately 150mm to 250mm is left uncoated at either end of the pipe section.

A factory-coating may take several different forms depending on the particular coating applicator. A conventional coating will typically comprise at least a first, or 'primer', layer, such as a fusion bonded epoxy (FBE) material or polypropylene, that is applied in either liquid or powdered form to the outer surface of the steel pipe section while it is being heated. To ensure a good bond between the steel pipe section and the primer layer, the pipe section is typically blast cleaned and etched with an appropriate anchor pattern. The pipe section is heated, before the primer layer is applied, to what is normally the curing temperature of the powdered or liquid primer material. On contact with the heated pipe section surface the primer material coalesces and cures to form a continuous layer. The primer layer mainly protects against corrosion. The primer layer may be used as the sole layer in a coating or it may be supplemented with a second layer to provide additional mechanical protective and thermal insulation properties.

Polypropylene, polyethylene, and polyurethane material have good mechanical protective and thermal insulation properties and they are commonly used to coat pipelines transporting fluids at up to 140 degrees Celsius. Polypropylene, polyethylene and polyurethane are widely used in factory-applied coating for pipe sections. While curing of the primer layer is ongoing, and so as to allow the layers to bond, a second layer of polypropylene, polyethylene or polyurethane coating is applied commonly by an injection moulding technique while the steel pipe section is heated by induction heating, for instance. All but the ends of the pipe section is enclosed by a heavy duty mould that defines a cavity around the uncoated pipe section, which is subsequently filled with hot molten polypropylene, polyethylene or polyurethane material from an injection moulding machine in the factory. Once the second layer has partially cooled and at least partially solidified, the mould is removed to leave the factory-applied coating in place on the pipe section.

Optionally, if polypropylene is used as the second layer in the coating, an additional layer of chemically modified polypropylene (CMPP) material which acts as an adhesive may be applied between the primer layer and second layer during the curing time (i.e. time taken to harden or set) of the primer layer. Likewise, if polyethylene is used as the second layer in the coating, an additional layer of polyethylene material which acts as an adhesive may be applied between the primer layer and second layer during the curing time of the primer layer.

Optionally, the second layer may comprise polypropylene or polyethylene material in the form of a tape wrapped in a helix over the first primer layer during the curing time of the primer. Optionally, the second layer may comprise a heat-shrink sleeve of polypropylene material heated to about 150 degrees Celsius and allowed to cool and shrink around the first primer layer during the curing time of the primer.

The uncoated ends are necessary to enable the pipe sections to be welded together to form a pipeline in the field. A section of pipeline where the ends of adjacent pipe sections are joined by welding is known as a field joint. After welding, the exposed ends of the steel pipe sections on either side of the weld (i.e. the field joint) must be coated. Field joint coatings may be applied using techniques similar, or equivalent, to the factory-applied coating techniques. Field joints coatings may be applied using a pliable sheet of materials like, for example, a polyethylene or polypropylene material formed in a cylindrical cover sleeve spanning the exposed ends of the steel pipe sections. A high density polypropylene, polyurethane or fusion bonded epoxy material may be injected into an annular space between the field joint and the cylindrical cover sleeve. The injected materials react at a temperature anywhere between about 80 to 250 degrees Celsius to form a high density infill. The cover sleeve provides puncture resistance and some abrasion resistance. Thus, the cover sleeve and infill material form a composite system which provides thermal insulation and impact resistance to the field joint.

The field joints and field joint coatings should have, as far as is possible, the same mechanical and thermal properties as the rest of the pipeline. Thus, a field joint section of pipeline should be properly prepared prior to coating. Preparation of a field joint section of pipeline may involve cleaning the field joint after welding so that is, as far as is possible, as clean as when it was originally blast cleaned and etched in the factory. A field joint coating should be made by a coating process that uses thermosetting plastics materials that are compatible with the adjacent factory-applied coatings. Compatibility of the factory-applied and field joint coatings permits fusion to occur between the factory-applied and the field joint coatings, thereby imparting greater integrity to the coatings at the field joint section of pipeline.

Pipelines may be constructed in a dedicated facility where the pipeline is pulled through the facility in increments equal to the length of one pipe section, as is typical for offshore subsea pipelines. With this construction process each welding, preparing and/or coating operation is performed in a fixed location with the field joint sections of pipeline moving into the position where the operations will be performed. With this construction process it is not always necessary to lift the field jointing machinery onto or off the pipeline.

Pipelines may be constructed in situ, where the welding, preparing and/or coating operation of each field joint section of pipeline occurs in, or very close to, the position where the pipeline will be buried, as is typical for onshore cross-country pipelines. With this construction process the field jointing machinery must be transported to each individual field joint in order to perform a welding, preparing and/or coating operation to that section of pipeline. The field jointing machinery is continually lifted on and off the pipeline in order to perform the operations sequentially along the chain of field joint sections of pipeline.

Aside from the differences caused by the need to continually lift the field jointing machinery on and off the pipeline, the welding, preparing and/or coating features are similar to field jointing machinery for use in a dedicated facility.

It is known to prepare a field joint section of pipeline for coating by cleaning it manually by operators using hand-held water jet wash units. This process is time-consuming, labour-intensive and incapable of containing all overspray from the water jets. Again, overspray has the potential to create a hazardous work area during the cleaning process and the operators may need to wear cumbersome personal protective equipment. Also, manually cleaning does not reliably clean the entire surface area of the field joint. This is important because any debris remaining on the field joint can adversely affect the subsequent coating process and degrade the mechanical and thermal properties of the field joint coating.

A variety of machinery is available to coat field joint sections of pipeline, largely aimed at reducing the time required to perform a coating process and economy of coating material, but also to help ensure a consistent application of coating material. Laying a pipeline typically involves coating several thousand field joints thus, even a small time saving in the time, or a small reduction in amount of coating material, required to coat each field joint can lead to significant overall cost savings.

It is known to quench a field joint coating with water poured over the top of the field joint. This hardens the surface of the field joint coating more quickly that would otherwise be the case if were allowed to cool and cure at ambient temperature. This allows the operators and their machinery to move to the next field joint and start work more quickly which saves time. The quenching process provides more stability to the field joint coating with respect to gravitational pull on the coating skin and as the coating passes over rollers supporting a pipeline. The quenching process toughens the coating skin against the external environment. Also, a field joint coating, once quenched, may be subjected to its high voltage integrity test which should only be done once the coating has cooled and cured. However, the quenching process may cause an uneven distribution of cooling around the circumference of the field joint coating because the top of it is exposed to the coldest water. Some alternative known methods involve an array of nozzles around the field joint coating. However, there remains a difficulty in achieving an even distribution and rate of cooling. When field joint coatings are cooled at uneven rates, it may affect the crystalline structure of the coating material. For example, an imbalance may cause the field joint coating material to be a largely amorphous structure on one side and a partially crystalline structure on the other side, depending on which side experienced the fastest rate of cooling. A crystalline structure carries a higher density and more shrinkage than an amorphous structure and this may cause stress to develop across the body of the field joint coating. Also, overspray from the nozzles can create a hazardous work area during the quenching process.

Patent publication number US5,136,969 discloses a machine and method for reconditioning pipelines. The machine comprises a frame capable of assembly around a pipeline and a ring construction for placement around the pipeline and rotation about rollers attachable to the frame. Reconditioning devices may be mounted on the ring construction and a rotating module is attachable to the frame to engage and rotate or oscillate the ring construction around the pipeline.

In an aspect of the present invention, there is provided a machine for spraying a section of pipeline, the machine comprising: an enclosure configured to surround a

In an aspect of the present invention, there is provided a machine for spraying a section of pipeline, the machine comprising: an enclosure configured to surround a section of pipeline; a frame rotatable about a section of pipeline in the enclosure; rotating means operable to rotate the frame; a water delivery arrangement mounted on the frame and rotatable therewith to spray water around a section of pipeline in the enclosure; and an air delivery arrangement mounted on the frame and rotatable therewith to spray air around a section of pipeline in the enclosure. The water delivery arrangement may be used to spray water to either clean a field joint of debris prior to coating or quench a new field joint coating to cool its surface and improve its mechanical properties. In the case of quenching a newly-coated field joint, the air delivery arrangement may provide an initial blast of compressed air which may form, assisted by coanda effect, a blanket of air around the section of pipeline. The blanket of air gently cools the field joint coating to prime it against thermal shock of subsequent water quenching. A more gradual quenching process results in a more even crystalline structure and surface finish in the coating material. Optionally, the air delivery arrangement may be used to help dry the field coating after the quenching process is finished. In the case of cleaning, particularly after water jet cleaning with the water delivery arrangement, the air delivery arrangement's air spray rids the section of pipeline of excess water, aids the drying process and helps to remove any remaining debris prior to the section of pipeline leaving the machine. These advantages contribute to faster and a more effective field joint fabrication process which saves time and, over several thousand field joints, may lead to significant overall cost savings. The machine may have a modular construction so that it may be modified to quench or clean sections of pipeline having different axial lengths and/or diameters.

Preferably, the air delivery arrangement is rotationally displaced about the axis of rotation of the frame from the water delivery arrangement. This may help to avoid cluttering the frame and may help to prevent interference between the air and water sprays.

Preferably, the water delivery arrangement comprises a plurality of water delivery manifolds each water delivery manifold being mounted at substantially equiangular intervals about the axis. This may help spread the water sprays more evenly about the circumference of the field joint section of pipeline in the enclosure and improve quenching or cleaning efficiency as the frame rotates about the section of pipeline.

Preferably, the water delivery arrangement is capable of spraying water at between 50 and 150 Bar pressure, preferably at substantially 100 Bar pressure. High pressure water spray may help to dislodge debris from the bare metal surface of a field joint.

Alternatively, the water delivery arrangement is capable of spraying water at between 2 and 6 Bar pressure, preferably at substantially 4 Bar pressure. Low pressure water spray may quench the field joint coating without causing damage or abrasion to the surface of a not yet fully cured field joint coating.

Preferably, the machine comprises a heater arrangement mounted on the frame and rotatable therewith to heat a section of pipeline in the enclosure. The heater may hasten drying of the bare metal surface of a field joint so that a subsequent coating process may take place sooner and save time. Preferably, the heater arrangement comprises an induction heater arrangement. This may facilitate heating the field joint's metal up to the factory-applied coatings.

Preferably, the heater arrangement comprises a plurality of heaters each heater being mounted at angular intervals about the axis. This may help spread heating evenly about the circumference of the field joint section of pipeline in the enclosure and improve heating efficiency.

Preferably, the water delivery arrangement is fluidly coupled to a source of water cooled to below ten degrees Celsius. This may accelerate the quenching process.

Preferably, the air delivery arrangement is capable of spraying air at between 4 and 8 Bar pressure, preferably at substantially 6 Bar pressure. This may help to dislodge debris from the bare metal surface of a field joint or displace and dry water from the surface of a field joint coating.

Preferably, the air delivery arrangement comprises a plurality of air delivery manifolds each air delivery manifold being mounted at substantially equiangular intervals about the axis. This may help spread the air sprays evenly about the circumference of the field joint section of pipeline in the enclosure and improve quenching or cooling efficiency.

Preferably, the machine comprises a hopper for collecting matter from inside the enclosure. The enclosure helps to prevent overspray of air and water jets which, along with any debris cleaned from the surface of the section of pipeline, is fully contained within the enclosure, collected and evacuated. This may improve the working environment by avoiding water puddles and collecting debris rather than allowing it to collect around the machine.

In a second aspect of the present invention, there is provided a process for spraying a section of pipeline, the process comprising: providing a machine for spraying a section of pipeline, the machine having an enclosure, a rotatable frame, rotating means operable to rotate the frame and a water delivery arrangement and an air delivery arrangement mounted on the frame and rotatable therewith; disposing the frame about the section of pipeline; surrounding a section of pipeline to be sprayed with the enclosure; operating rotating means to rotate the frame; directing one of the air delivery arrangement to spray air around the section of pipeline or the water delivery arrangement to spray water around the section of pipeline; and then directing the other of the air delivery arrangement to spray air around the section of pipeline or the water delivery arrangement to spray water around the section of pipeline. The second aspect of the invention has the advantages as the first aspect of the invention.

Preferably, the process comprises: directing the air delivery arrangement to spray air around the section of pipeline for substantially one minute; then directing the water delivery arrangement to spray water around the section of pipeline for substantially three minutes; and then optionally directing the air delivery arrangement to spray air around the section of pipeline for up to one minute. This may provide an improved two-stage quenching process where the air gently initially cools the field joint coating to prime it against thermal shock of the subsequent more rapid water quenching stage. A more gradual quenching process results in a more even crystalline structure and surface finish in the coating material. The option of a final blast of air from the air delivery arrangement may be used to help dry the field coating after the quenching process is finished.

Preferably, the air delivery arrangement is directed to spray air at between 4 and 8 Bar pressure and the water delivery arrangement is directed to spray water at between 2 and 6 Bar pressure.

Alternatively, the process comprises: directing the water delivery arrangement to spray water around the section of pipeline for substantially thirty seconds; then directing the air delivery arrangement to spray air around the section of pipeline for substantially one minute; and then optionally directing a heater arrangement mounted on the frame and rotatable therewith to heat metal around the circumference of the section of pipeline, preferably to a temperature of between 90 and 130 degrees Celsius. This may provide an improved two-stage cleaning process initiated by water jet cleaning by the water delivery arrangement. This is followed by air jet cleaning by the air delivery arrangement which rids the section of pipeline of any remaining debris or excess water and helps the drying process. Optionally, the drying process may be accelerated by the heater arrangement acting on the bare metal of the field joint section of pipeline between the factory-applied coatings.

Preferably, the water delivery arrangement is directed to spray water at between 50 and 150 Bar pressure and the air delivery arrangement is directed to spray air at between 4 and 8 Bar pressure.

In the description which follows reference is made to construction of the pipeline at a dedicated facility, where the pipeline moves into the position where the welding, quenching, cooling and/or coating operations are performed. However, a machine for spraying a section of pipeline with water and air with a hinged cylindrical frame adapted to be continually lifted on and off the pipeline and transported from one field joint section of pipeline to the next is also referenced. In either case, the frame may be rotatable with or without the enclosure surrounding the section of pipeline.

The present invention will now be explained, by way of example only, with reference to the accompanying drawings of which:
Figure 1 shows a cross-sectional view of two joined pipe sections;
Figure 2 shows a perspective view of a first embodiment or a second embodiment of a machine according to the present invention;
Figure 3 shows a side elevation view of the machine of Figure 2 and indicates the position of sections IV-IV and VI-VI;
Figure 4 shows a cross-section view IV-IV of the first embodiment of the machine;
Figure 5 shows a perspective view of a cylindrical frame of the first embodiment of the machine;
Figure 6 shows a cross-section view VI-VI of the second embodiment of the machine;
Figure 11 shows an end view of water being sprayed from three low pressure water delivery manifolds upon a field joint coating of a section of pipeline;
Figure 12 shows a side elevation view of a high pressure water delivery manifold;
Figure 13 shows a side elevation view of an induction heater plate; and
Figure 14 shows a schematic diagram of a water cooling circuit.

As mentioned above, multiple hollow cylindrical steel pipe sections are welded together to construct a pipeline. The individual lengths of pipe sections are, prior to being welded into a pipeline, normally coated at a factory remote from where the pipeline is laid.

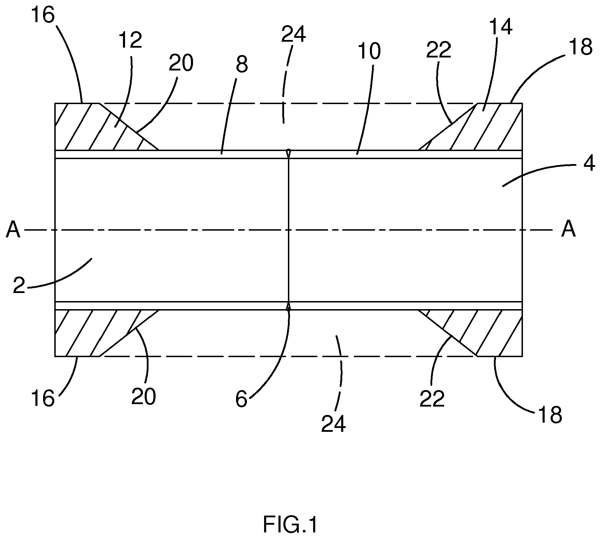

Referring to Figure 1, there are shown two steel pipe sections 2,4 joined together in end-to-end relation by a welded joint 6 to form what is a section of a pipeline that may extend over many kilometres. The pipe sections 2, 4 have the same central longitudinal axis A-A. Approximately, but not limited to, 150mm to 250mm of bare steel at the ends 8, 10 of the pipe sections 2, 4 enables welding of the welded joint 6. The ends 8, 10 of the pipe sections 2, 4 and the welded joint 6 are referred to as the field joint. The rest of the pipe sections 2, 4 are coated with a factory-applied coating 12, 14 of material, like, for example, polypropylene, polyethylene or polyurethane material. The cylindrical portions 16, 18 of the factory-applied coating 12, 14 are progressively cut back as conical chamfered portions 20, 22 in the approach to the bare steel ends 8, 10 of the pipe sections 2, 4. The location of where a field joint coating 24 would fill the gap between the two factory-applied coatings 12, 14 is shown in ghost lines.

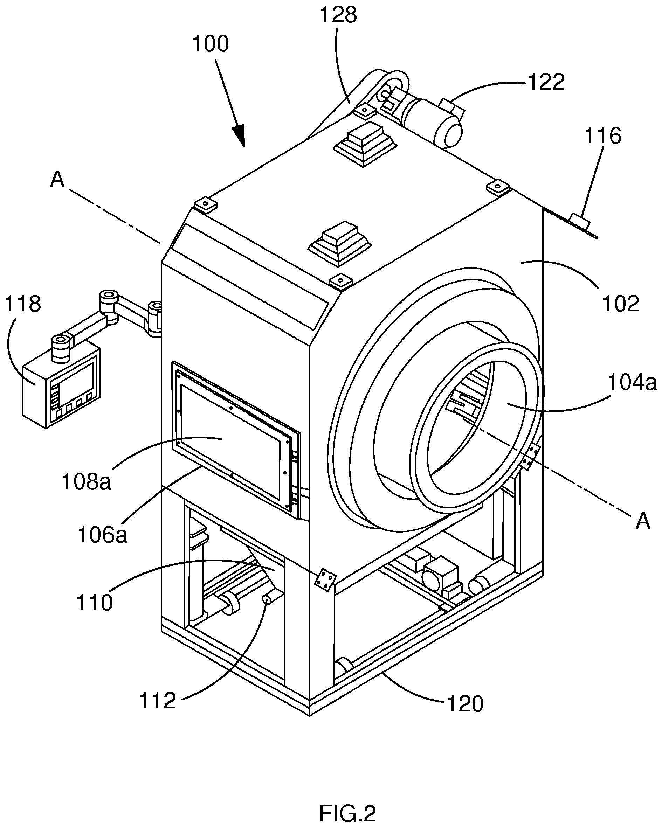

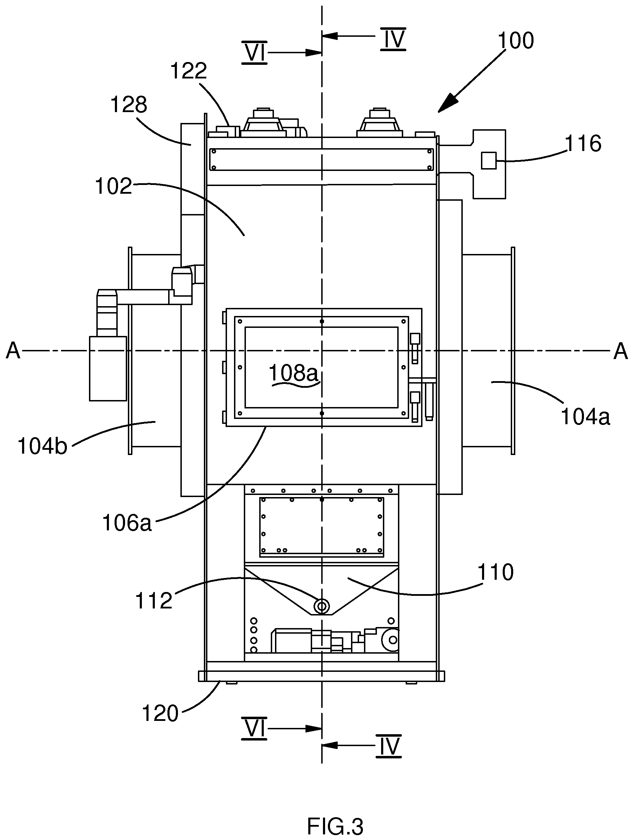

Referring to Figure 2 and 3, there is shown a machine 100 for spraying a section of pipeline with water and air according to the present invention. The machine 100 comprises a generally cuboids-shaped enclosure 102. The enclosure 102 has in internal cavity through which may pass a sequence of pipe sections welded together at field joints to form a pipeline. The enclosure 102 has a pair of mutually aligned circular pipeline holes 104a, 104b, one through each opposite end of the body and coaxial with a longitudinal axis A-A through the centre of the machine 100. The pipeline holes 104a, 104b are large enough to accommodate the passage of pipelines having various diameters of anywhere between 0.05 metres to 1.5 metres.

The enclosure 100 has a lockable hinged door 106a, 106b on each opposite side to provide an operator with access to inside the enclosure 102. Each door 106a, 106b has a respective window 108a, 108b providing an operator with visibility of inside the enclosure 102.

circular pipeline holes 104a, 104b, one through each opposite end of the body and coaxial with a longitudinal axis A-A through the centre of the machine 100. The pipeline holes 104a, 104b are large enough to accommodate the passage of pipelines having various diameters of anywhere between 0.05 metres to 1.5 metres.

The enclosure 100 has a lockable hinged door 106a, 106b on each opposite side to provide an operator with access to inside the enclosure 102. Each door 106a, 106b has a respective window 108a, 108b providing an operator with visibility of inside the enclosure 102.

The bottom of the enclosure 102 is shaped as a hopper 110 to collect water, debris and any other matter falling towards the hopper 110, under gravity, and direct it towards a water extraction hose 112 at a lowest point of the hopper 110. The water extraction hose 112 delivers the water, either under gravity or by pumping, to a bath 300 which is outside the enclosure 102. A water delivery hose 114 delivers fresh water, or water recycled from the bath 300, to a water delivery port 116 located at the top of the enclosure 102, as is described in more detail below.

The machine 100 comprises a human / machine interface 118 to enable control of the machine 100 by an operator. The interface 118 presents an operator with a menu to start or stop the machine 100 and/or select a process. Other aspects of the process may be controlled automatically by the interface 118 once the operator has started the machine 100.

The enclosure 102 is supported on the ground by a base plate 120. The machine 100 comprises an electric motor 122 fixed to the enclosure 102. The electrical power supply to the motor 122 is controlled by the interface 118.

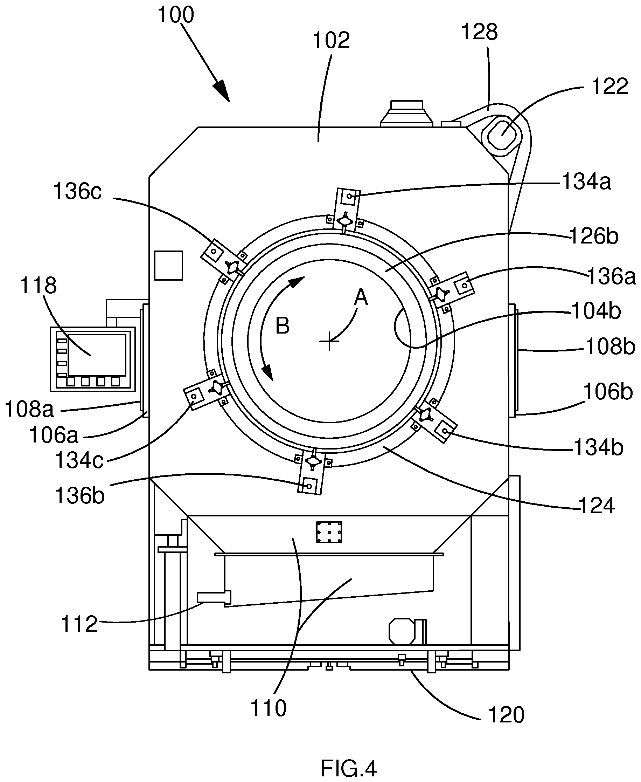

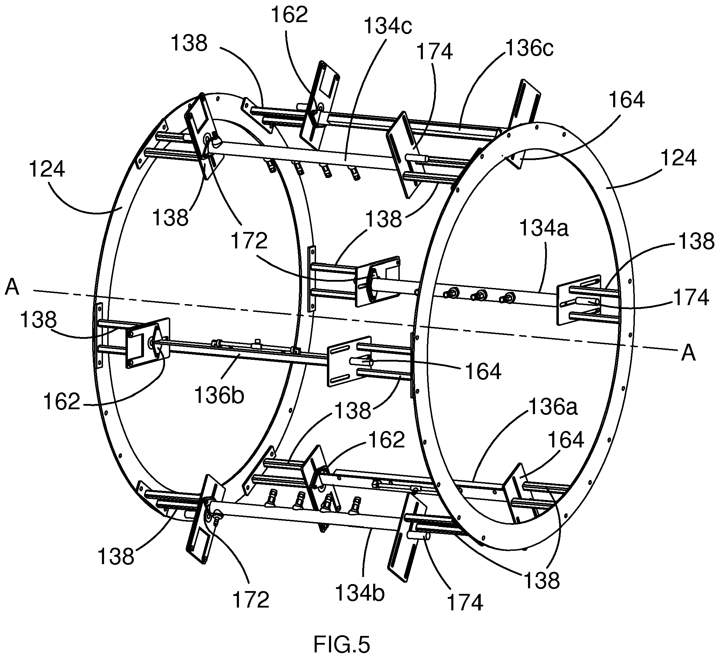

Referring to Figures 4 and 5, there is shown the inside of a first embodiment of the machine 100 which comprises a first frame 124 circumscribing a generally hollow cylindrical shape coaxial with the axis A-A of the pipeline holes 104a, 104b and a pipeline in the enclosure 102. The first frame 124 is made of aluminium, stainless steel or another substantially rigid material. The first frame 124 is supported for rotation about the axis A-A by a pair of bearings 126a, 126b, one at each opposite axial end of the enclosure 102 adjacent a respective pipeline hole 104a, 104b. The motor 122 is coupled to the first frame 124 via a transmission (not shown) protected by a shroud 128. The transmission may be any mechanism capable of transmitting the motor's rotational output to rotation of the first frame, like, for example, an endless chain or belt or a drive shaft. The first frame 124 is rotatable by the motor 122 in both directions of double-headed arrow B through and arc of 120 degrees (+/five degrees to help facilitate total spray coverage). The electrical power supply and operation of the motor 122 is controlled by the interface 118.

The first frame 124 comprises an arrangement of three low pressure (LP) water delivery manifolds 134a, 134b, 134c fixed to the perimeter of the first frame 124 at equiangular intervals of 120 degrees about the axis A-A. The LP water delivery manifolds 134a, 134b, 134c are arranged so that they may spray water over the whole circumference of a field joint coating 24 covering the ends 8, 10 of pipe sections 2, 4 (i.e. a field joint 6, 8, 10) in the enclosure 102, as is described in below. Water supply and operation of the LP water delivery manifolds 134a, 134b, 134c is controlled by the interface 118.

The first frame 124 comprises and arrangement of three air delivery manifolds 136a, 136b, 136c fixed to the perimeter of the first frame 124 at equiangular intervals of 120 degrees about the axis A-A. The air deliver manifold 136a is located approximately equidistantly between the LP water delivery manifolds 134a, 134b, the air deliver manifold 136b is located approximately equidistantly between the LP water delivery manifolds 134b, 134c, and air deliver manifold 136c is located approximately equidistantly between the LP water delivery manifolds 134c, 134a. The air deliver manifolds 136a, 136b, 136c are arranged so that they may blow a jet stream of compressed air in a line, or blade, spanning a field joint coating 24 in the enclosure 102, as is described in below. Air supply and operation of the air deliver manifolds 136a, 136b and 136c is controlled by the interface 118.

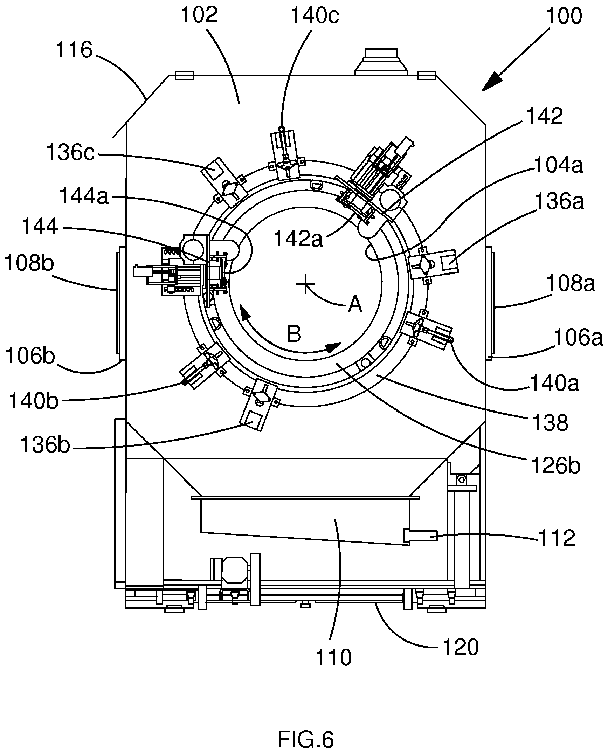

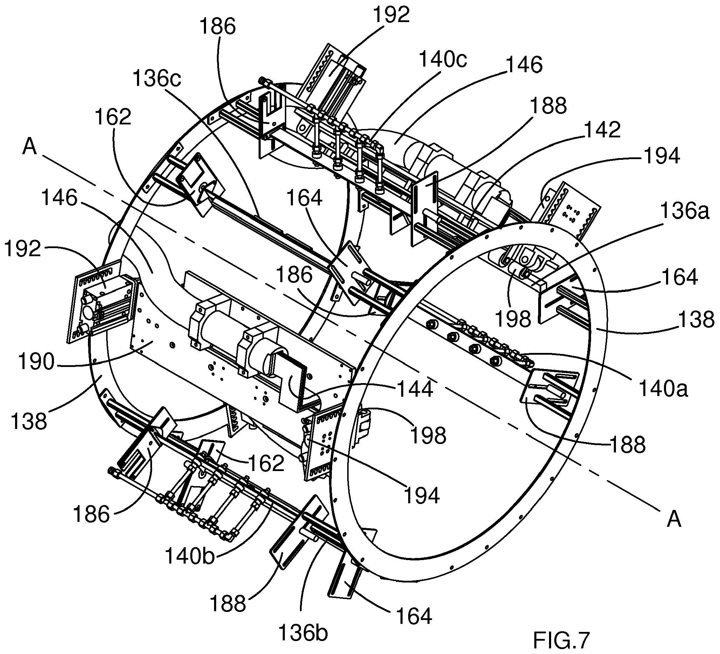

Referring to Figures 6 and 7, there is shown a second embodiment of the machine 100 which comprises a second frame 138 circumscribing a generally cylindrical shape coaxial with the axis A-A of the pipeline holes 104a, 104b and a pipeline in the enclosure 102. The second frame is made of aluminium, stainless steel or another substantially non-magnetic rigid material. The second frame 138 is supported for rotation about the axis A-A by the pair of bearings 126a, 126b. The motor 122 is coupled to the second frame 138 via a transmission (not shown) protected by the shroud 128. The transmission may be any mechanism capable of transmitting the motor's rotational output to rotation of the second frame, like, for example, an endless chain or belt or a drive shaft. The second frame 138 is rotatable by the motor 122 in both directions of double-headed arrow B through and arc of 180 degrees (+/- 5 degrees to help facilitate total spray coverage).

The second frame 138 comprises an arrangement of three of high pressure (HP) water delivery manifolds 140a, 140b, 140c fixed to the perimeter of the second frame 138 at equiangular intervals of 120 degrees about the axis A-A. The HP water delivery manifolds 140a, 140b are arranged so that they may spray a water jet spanning a field joint 6, 8, 10 in the enclosure 102, as is described in below. Water supply and operation of the HP water delivery manifolds 140a, 140b, 140c is controlled by the interface 118.

The second frame 138 comprises an arrangement of three air delivery manifolds 136a, 136b, 136c fixed to the perimeter of the second frame 138 at equiangular intervals of 120 degrees about the axis A-A. The air deliver manifold 136a is located approximately forty degrees about the axis A-A in an anti-clockwise direction (when viewed in Figure 6) from the HP water delivery manifold 140a. The air deliver manifold 136b is located approximately forty degrees about the axis A-A in an anti-clockwise direction from the HP water delivery manifold 140b. The air deliver manifold 136c is located approximately forty degrees about the axis A-A in an anti-clockwise direction from the HP water delivery manifold 140c. The air delivery manifolds 136a, 136b, 136c are arranged so that they may blow a jet of air in a line, or blade, spanning a field joint 6, 8, 10 in the enclosure 102, as is described in below. Air supply and operation of the air deliver manifolds 136a, 136b is controlled by the interface 118.

The second frame 138 comprises an arrangement of two of induction heater plates 142, 144 fixed to the perimeter of the second frame 138. The induction heater plates 142, 144 are an advantageous, though optional, feature which may be omitted from the second frame 138 to save space, weight or cost. The induction heater plate 142 is located approximately equidistantly between the HP water delivery manifold 140c and the air deliver manifold 136a. The induction heater plate 144 is located approximately equidistantly between the HP water delivery manifold 140b and the air deliver manifold 136c. Each induction heater plate 142, 144 has a partially cylindrical underside 142a, 144a facing a field joint 6, 8, 10 in the enclosure 102. The partially cylindrical undersides 142a, 144a are elongate in a direction parallel to the axis A-A so that they substantially span the whole length of the field joint 6, 8, 10 between the conical chamfers 20, 22 on the factory-applied coatings 12, 14. The longitudinal axes of the cylindrical undersides 142a, 144a are orientated parallel to the axis A-A and match, as far as possible, the cylindrical outer shape of the field joint 6, 8, 10. This helps the induction heater plates 142, 144 to direct and concentrate the induction heating effect towards the field joint 6, 8, 10. The electrical power supply and operation of the induction heater plates 142, 144 is controlled by the interface 118.

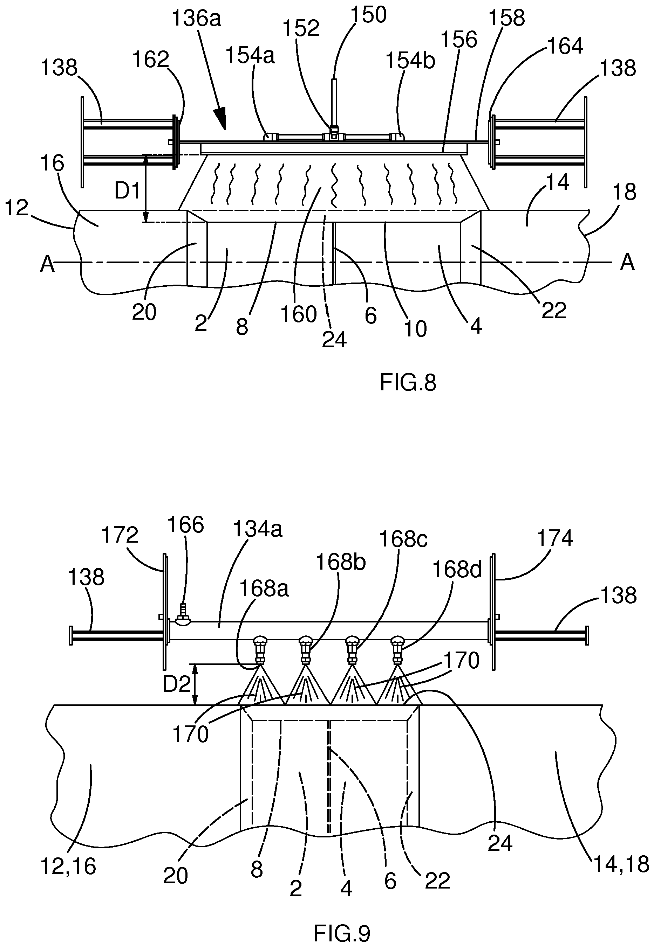

Referring to figures 8, there is shown the air delivery manifold 136a in more detail, it being understood that the other air delivery manifolds 136b, 136c have the same basic construction. The air delivery manifold 136a has a generally elongate profile when viewed from a side. The air delivery manifold 136a comprises a compressed air delivery tube 150 coupled to an air compressor (not shown) upstream of the air delivery tube 150. The air compressor is capable of compressing air to approximately 6 Bar and delivering a volumetric air flow of between approximately 80 litres / second (approximately 170 CFM) and approximately 21 litres / second (approximately 45 CFM) divided equally between the air delivery manifolds 136a, 136b, 136c. The air compressor is standard equipment controlled by the interface 118 which is not described in any more detail. The compressed air delivery tube 150 divides at a T-junction 152 to each of a pair of air blade compressed air inlets 154a, 154b. The air delivery manifold 136a comprises an air blade outlet 156 on the underside of an air blade frame 158. The air blade outlet 156 has an elongate slit which is arranged to face a field joint coating 24, or a field joint 6, 8, 10, in the enclosure 102 and which is arranged substantially parallel to the axis A-A. One air blade compressed air inlet 154a delivers compressed air to the air blade outlet 156 at about one quarter of the length of the air blade outlet 156 from one end. The other air blade compressed air inlet 154b delivers compressed air to the air blade outlet 156 at about one quarter of the length of the air blade outlet 156 from the other end. In use, the air blade outlet 156 emits an air spray plane 160 (i.e. an air blade) of compressed air fanning out from the air blade outlet 156 and approaching the field joint coating 24, or the field joint 6, 8, 10, in a direction substantially in line with the axis A-A. The air blade 160 has a truncated generally fan-shaped profile when viewed from one side, as is shown in particular by figure 8. The air delivery manifold 136a comprises a pair of adjuster plates 162, 164, one adjuster plate coupled to each end of the air blade frame 158. The adjuster plates 162, 164 are fixed to the second frame 138, part of which is shown in figure 8. The adjuster plates 162, 164 may be adjusted by an operator to vary a distance D1 between the air blade outlet 156 and the pipe sections 2, 4 (measured from the bare metal of the field joint 6, 8, 10) in the enclosure 102 and/or accommodate pipe sections 2, 4 or different diameters. The air blade outlet 156 remains substantially parallel to the axis A-A notwithstanding a change in distance D1.

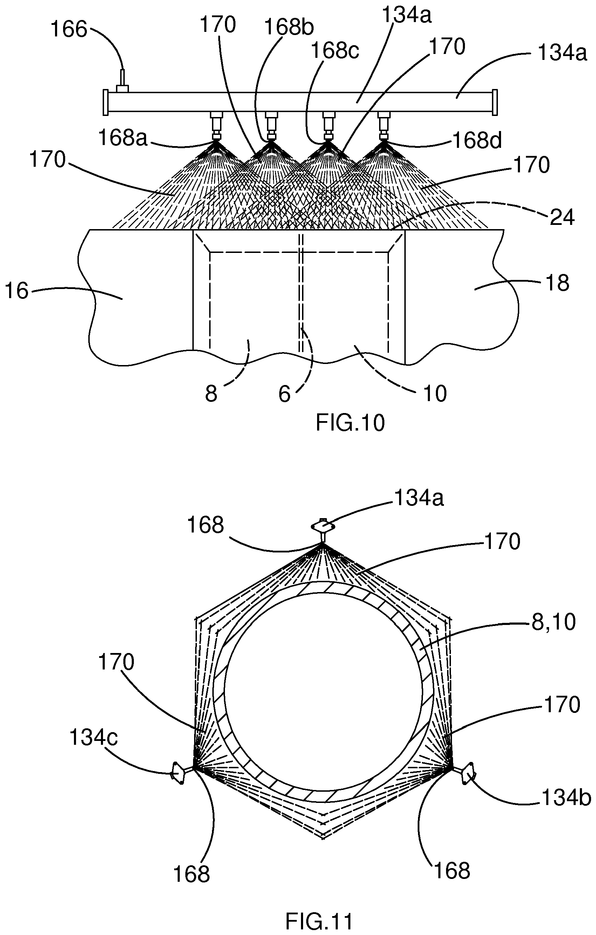

Referring to figures 9 to 11, there is shown the LP water delivery manifold 134a in more detail, it being understood that the other LP water delivery manifolds 134b, 134c have the same basic construction. The LP water delivery manifold 134a is a generally elongate cylinder when viewed from a side and which is arranged substantially parallel to the axis A-A. The LP water delivery manifold 134a comprises a low pressure water inlet 166 fluidly coupled to a low pressure (LP) water pump (not shown) up stream of the low pressure water inlet 166. The LP water pump is capable of pumping a volumetric water flow of approximately 40 litres / minute of water, chilled to around five degrees Celsius, to each of the LP water delivery manifolds 134a, 134b, 134c i.e. a total volumetric water flow of approximately 120 litres / minutes of water. The LP water pump is standard equipment controlled by the interface 118 which is not described in any more detail. The LP water delivery manifold 134a divides the water flow evenly between four low pressure water outlets 168a, 168b, 168c, 168d downstream for the LP water inlet 166. Each LP water outlet is a LP nozzle 168a, 168b, 168c, 168d that sprays water from the underside of the LP water delivery manifold 134a in the direction of a field joint coating 24 in the enclosure 102. In use, each LP nozzle 168a, 168b, 168c, 168d emits a conical spray 170 of water fanning outwardly so as the whole circumference of the field joint coating 24 is covered in water at the same time when viewed from one side, as is shown in particular by figure 10, and when viewed in the direction of the axis A-A, as is shown in particular by figure 11. The LP water delivery manifold 134a comprises a pair of adjuster plates 172, 174, one adjuster plate coupled to each end of the air blade frame 158. The adjuster plates 172, 174 are fixed to the second frame 138, part of which is shown in figure 9. The adjuster plates 172, 174 may be adjusted by an operator to vary a distance D2 between the LP nozzles 168a, 168b, 168c, 168d and the pipe sections 2, 4 (measured from the field joint coating 24) and/or accommodate pipe sections 2, 4 or different diameters. The LP water deliver manifold 134a remains substantially parallel to the axis A-A notwithstanding a change in distance D2.

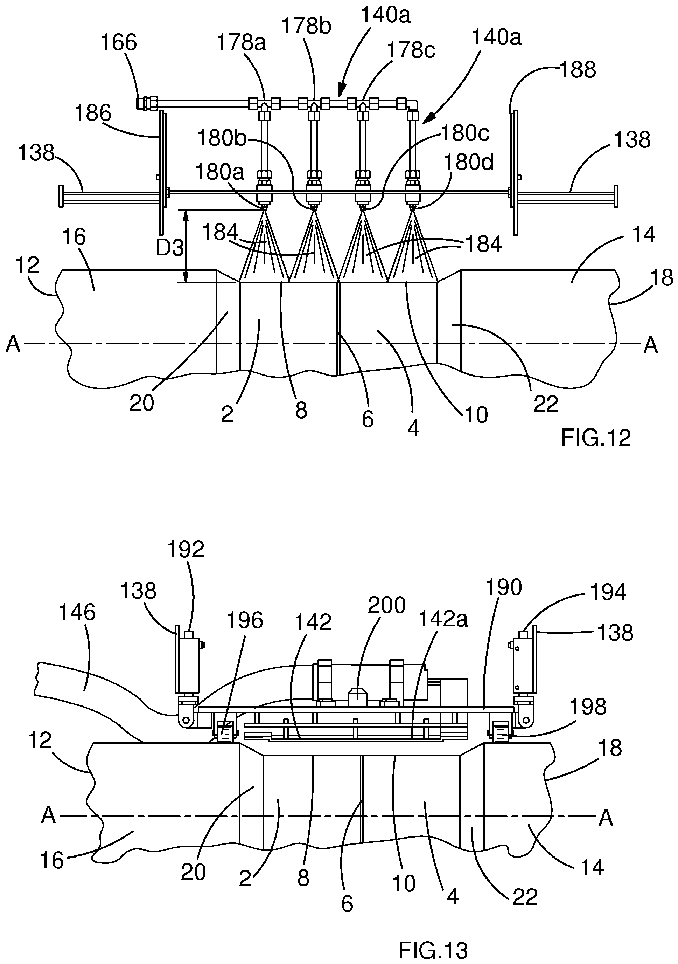

Referring to figure 12, there is shown the HP water delivery manifold 140a in more detail, it being understood that the other HP water delivery manifold 140b has the same basic construction. The HP water delivery manifold 140a comprises a high pressure water inlet 176 fluidly coupled to a high pressure (HP) water pump (not shown) upstream of the HP water inlet 176. In between the HP water pump and the HP water delivery manifold 140a is a filter (not shown) for filtering and cleaning water destined for the HP water delivery manifold 140a. The HP water pump is capable of pumping a volumetric water flow of approximately 50 litres / minute of water at a pressure of approximately 100 Bar to each of the HP water delivery manifolds 140a, 140b i.e. a total volumetric water flow of approximately 100 litres / minutes of water. The HP water pump is standard equipment controlled by the interface 118 which is not described in any more detail. The HP water delivery manifold 140a comprises three T-junctions 178a, 178b, 178c. The HP water delivery manifold 140a and its three T-junctions 178a, 178b, 178c divide the water flow from the HP water inlet 176 evenly between three high pressure water outlets 180a, 180b, 180c, each downstream of a respective T-junction, and a fourth HP water outlet 180d coupled to the end of the HP water delivery manifold 140a. Each HP water outlet is a HP nozzle 180a, 180b, 180c, 180d fixed to the underside of a HP water manifold frame 182. Each HP nozzle 180a, 180b, 180c, 180d sprays a respective jet of water from the underside of the HP water manifold frame 182 in the direction of a field joint 6, 8, 10 in the enclosure 102. In use, each HP nozzle 180a, 180b, 180c, 180d sprays a HP water jet 184 with a spray plane fanning out at about 40 degrees. The edges of adjacent HP water jets 184 merge into a band spanning the field joint 6, 8, 10 in the enclosure 102. The HP water delivery manifold 140a comprises a pair of adjuster plates 186, 188, one adjuster plate coupled to each end of the air blade frame 158. The adjuster plates 186, 188 are fixed to the second frame 138, part of which is shown in figure 12. The adjuster plates 186, 188 may be adjusted by an operator to vary a distance D3 between the HP nozzles 180a, 180b, 180c, 180d and the pipe sections 2, 4 (measured from the bare metal of the field joint 6, 8, 10) and/or accommodate pipe sections 2, 4 or different diameters. The HP water deliver manifold 140a remains substantially parallel to the axis A-A notwithstanding a change in distance D3.

Referring to Figure 13, there is shown the induction heater plate 142 in more detail, it being understood that the other induction heater plate 144 has the same basic construction. The induction heater plate 142 has a generally rectangular outer profile, when viewed from above. The induction heater plate 142 is electrically coupled by an electrical cable 146 to an alternating electrical power supply (not shown) having, and purely for the purpose of example, an output variable up to 110kW and a frequency of between 10 and 25kHz to produce an induction heating effect in the induction heater plates 142. Alternating electrical power supplies for induction heaters are standard parts well known in this field of technology. Operation of the alternating electrical power supply to the induction heater plates 142, 144 is controlled by the interface 118.

The induction heater plate 142 is fixed to the underside of an induction heater frame 190 which is coupled to the second frame 138 via a pair of induction heater coupling mechanisms 192, 194. Also fixed to the underside of the induction heater frame 190 is a pair of rollers 196, 198, one at each opposite axial end of the induction heater frame 190. One induction heater coupling mechanism 192, 194 is located at each axial end of the induction heater frame 190. The induction heater coupling mechanisms 192, 194 may be adjusted by an operator to vary a distance between the induction heater plate 142 and a field joint 6, 8, 10 in the enclosure 102 and/or accommodate pipe sections 2, 4 or different diameters. The rollers 196, 198 are rotatable about an axis parallel to the axis A-A. The induction heater coupling mechanisms 192, 194 resiliently bias the induction heater frame 190 a short radial distance towards the axis A-A to bring each roller 196, 198 into contact with a respective factory-applied coating 12, 14 of pipe sections 2, 4 in the enclosure 102. The induction heater coupling mechanisms 192, 194 act independently of each other to maintain the induction heater underside 142a parallel to outer cylindrical shape of the field joint 6, 8, 10 in the enclosure 102 which, in normal circumstances, is also parallel to the axis A-A. In use, the rollers 196, 198 follow the shape of the pipe sections 2, 4 and, in combination with the induction heater coupling mechanisms 192, 194, move the induction heater underside 142a in a way that compensates for different diameters of pipe sections 2, 4 and/or deviations from a purely cylindrical outer shape. This tolerance ensures that the induction heater plate 142 is maintained at about the right height (approximately 10mm to 20mm) above the field joint 6, 8, 10 for optimum induction heating and/or to avoid the welded joint 6 which can stand 5mm proud of that section of pipeline.

It is important that the induction heater plates 142, 144 are electrically insulated from the second frame 138 and surrounding structures mounted thereupon. The induction heater plates 142, 144 are coated or wrapped with an insulating material.

The induction heater plates 142, 144 are sized and positioned so that they may heat a standard length of field joint 6, 8, 10 section of pipeline (i.e. having an axial length of approximately 300mm in the example shown, although it can be up to a length of 725mm or more) up to, but not including, the chamfered portions 20, 22 of the factory-applied coatings 12, 14.

Each induction heater frame 190 comprises a pyrometer 200 for measuring the surface temperature of the field joint 6, 8, 10 section of pipeline in its vicinity. These temperatures are communicated to the interface 118 in real time. The interface 118 displays these temperatures to the operator.

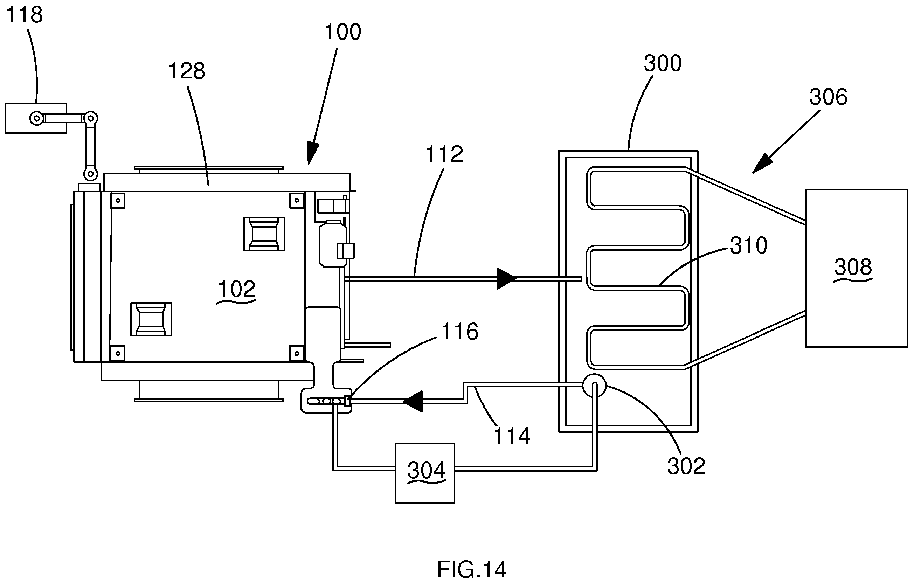

Referring to Figure 14, there is shown a water circuit for circulating water to and from the machine 100. The water circuit comprises the machine 100, the water extraction hose 112, the bath 300 and the water delivery hose 114. The hopper 110 collects water from inside the enclosure 102 and delivers it to the water extraction hose 112 through which is flows, either under gravity or by pumping, to the bath 300 where the water is collected. Submerged in the bath water is a submergible pump 302 fluidly coupled to the water delivery hose 114. The submergible pump 302 is powered by a control box 304 operated by the interface 118. Water pumped by the submergible pump 302 flows from the bath 300, through the water delivery hose 114 and to the water delivery port 116 at the top of the enclosure 102. Once inside the enclosure 102, water from the delivery hose 114 flows through internal pipes to either the LP water pump, in the case of the first embodiment of the machine 100, or the HP water pump, in the case of the second embodiment of the machine 100.

Water delivered to the first embodiment of the machine 100 should to be chilled to about five degrees Celsius for the purpose of quenching a field coating 24 in the enclosure 102. For this purpose, the bath 300 has a chiller circuit 306 comprising a refrigeration unit 308 for delivery of cooled refrigerant to, and recovery of warmed refrigerant from, a submersible heat exchanger 310 in the bath water. The refrigeration unit 308 may be powered by a shore supply. The refrigeration unit 308 and its cooling temperature may be controlled by the interface 118 or, alternatively, it may be independently set by the operator to chill the bath water to a particular temperature. In use, the heat exchanger 310 is submerged in the water recovered from the enclosure 102 and cools it, while in the bath 300, to about five degrees Celsius ready for re-use. The cooled bath water is pumped by the submergible pump 302 to the enclosure 102. The submergible pump 302 has, at its inlet, a filter to processes to prepare a welded field joint 6, 8, 10 section of pipeline for a field joint coating later in the manufacturing process.

Referring to the first embodiment of the machine 100, as is shown particularly in figures 4 and 5, a new field joint coating 24, which is still relatively hot, is fed through the pipeline holes 104a, 104b of the machine 100 to the middle of the first frame 124. This can be visuafly checked by an operator looking through the windows 108a, 108b. The weight of the pipe sections 2, 4 is supported on each side of the enclosure 102 by external supports (not shown). The enclosure 102 surrounds the field joint coating 24 around the field joint 6, 8, 10 section of pipeline without performing a support function. An operator seals the enclosure 102 with stationary rubber seals fixed around the pipeline holes 104a, 104b.

The operator selects a quenching process from the menu presented by the human/machine interface 118 and starts the machine 100.

The three air delivery manifolds 136a, 136b, 136c are activated to blow air blades 160 of compressed air at the field joint coating 24. At the same time, the electric motor 122 is activated to rotate the cylindrical first frame 124, and all components mounted thereto, about the axis A-A in oscillating sweeps of 120 degrees (to expose the whole field joint coating 24 to the compressed air of the air blades 160) in both directions of double-headed arrow B. This forms, assisted by coanda effect, a blanket of air around the field joint coating 24. The air blades 160 begin cooling the field joint coating 24.

After about sixty seconds, the three air delivery manifolds 136a, 136b, 136c are deactivated and the three LP water delivery manifolds 134a, 134b, 134c are activated. The four LP nozzles 168a, 168b, 168c, 168d on each of the LP water delivery manifolds 134a, 134b, 134c ensure that the whole surface of the field joint coating 24 is covered by water spray cooled to about five degrees Celsius by the chiller circuit 306. Each LP nozzle provides 10 litres/minute volumetric flow rate at approximately 4 Bar pressure.

After about three minutes of water spray, the three LP water delivery manifolds 134a, 134b, 134c are deactivated. Optionally, for a period of between 40 and 60 seconds, the three air delivery manifolds 136a, 136b, 136c may be reactivated to blow water remaining from the quenching operation from the field joint coating 24 and contribute to drying the field joint coating 24 before it leaves the enclosure 102.

Throughout the quenching process, water used to quench the field joint coating 24 falls, under gravity, into the hopper 110 where it flows into the water extraction hose 112 to be delivered to the bath 300 outside the enclosure 102 for cooling and reuse. After about forty to sixty seconds, the three air delivery manifolds 136a, 136b, 136c are deactivated. The operator removes the stationary rubber seals from around the pipeline holes 104a, 104b. The quenched field joint coating 24 is fed through the middle of the first frame 124 and out the pipeline holes 104a, 104b of the machine 100. Again, this can be visually checked by the operator looking through the windows 108a, 108b. The enclosure 102 is now ready to receive another field joint coating 24 around a field joint 6, 8, 10 section of pipeline.

Referring to the second embodiment of the machine 100, as is shown particularly in figures 6 and 7, a welded joint 6 of two factory-coated pipe sections 2, 4 is fed through the pipeline holes 104a, 104b of the machine 100 to the middle of the second frame 138. This can be visually checked by an operator looking through the windows 108a, 108b. The weight of the pipe sections 2, 4 is supported on each side of the enclosure 102 by external supports (not shown). The enclosure 102 surrounds the field joint 6, 8, 10 section of pipeline without performing a support function. An operator seals the enclosure 102 with stationary rubber seals fixed around the pipeline holes 104a, 104b.

The operator selects a washing process from the menu presented by the human /machine interface 118 and starts the machine 100.

The three HP water delivery manifolds 140a, 140b, 140c are activated to spray the HP water jets 184 at the field joint 6,8,10, each HP nozzle 180a, 180b, 180c, 180d providing 12.5 litres/minute volumetric flow rate at 100 Bar pressure. At the same time, the electric motor 122 is activated to rotate the cylindrical second frame 138, and all components mounted thereto, about the axis A-A in oscillating sweeps of approximately 120 degrees (to expose the whole field joint 6, 8, 10 to the HP water jets 184 and the air blades 160) in both directions of double-headed arrow B. The HP water jets 184 dislodge debris and wash it away from the field joint 6, 8, 10.

After thirty seconds, the three HP water delivery manifolds 140a, 140b, 140c are deactivated and three air delivery manifolds 136a, 136b, 136c are activated. The three air delivery manifolds 136a, 136b, 136c blow air blades 160 of compressed air at the field joint 6, 8, 10. The air blades 160 aid removal of the dislodged debris and any excess water and help dry the field joint 6, 8, 10 before it leaves the enclosure 102. After a period of about sixty seconds, the three air delivery manifolds 136a, 136b, 136c are deactivated. Water and debris washed from the field joint 6, 8, 10 falls, under gravity, into the hopper 110 where it flows into the water extraction hose 112 to be delivered to the bath 300 outside the enclosure 102 for reuse, disposal or recycling.

Optionally, the second embodiment of the machine 100 may be equipped with the induction heater plates 142, 144. If so, once the three air delivery manifolds 136a, 136b, 136c are deactivated and the washing process is complete, the induction heater plates 142, 144 are activated. The rollers 196, 198 contact the factory-applied coatings 12, 14 of pipe sections 2, 4. Heating is automatically tuned by the alternating electrical power supply according to the distance between the induction heater plates 142, 144 and the bare steel field joint 6, 8, 10. The induction heater plates 142, 144 are configured to heat the field joint 6, 8, 10 section of pipeline between the chamfered portions 20, 22 of the factory-applied coatings 12, 14. The induction heater plates 138, 142 need only heat the surface of the field joint 6, 8, 10 to a shallow depth (i.e. about 0.3mm) to temperature of about 110 degrees Celsius. The pyrometers 200 are activated to monitor the surface temperature of the field joint 6, 8, 10 section of pipeline. Once the field joint 6, 8, 10 is sufficiently warm and dry, as determined by the interface 118, the induction heater plates 142, 144 are deactivated. The field joint 6, 8, 10 is now ready for a field joint coating 24.

Once the three HP water delivery manifolds 140a, 140b, 140c the three air delivery manifolds 136a, 136b, 136c and, optionally, the induction heater plates 142, 144 are deactivated, the operator removes the stationary rubber seals from around the pipeline holes 104a, 104b. The washed field joint 6, 8, 10 section of pipeline is fed through the middle of the second frame 138 and out the pipeline holes 104a, 104b of the machine 100. Again, this can be visually checked by the operator looking through the windows 108a, 108b. The enclosure 102 is now ready to receive another field joint 6, 8, 10 section of pipeline.

as determined by the interface 118, the induction heater plates 142, 144 are deactivated. The field joint 6, 8, 10 is now ready for a field joint coating 24.

Once the three HP water delivery manifolds 140a, 140b, 140c the three air delivery manifolds 136a, 136b, 136c and, optionally, the induction heater plates 142, 144 are deactivated, the operator removes the stationary rubber seals from around the pipeline holes 104a, 104b. The washed field joint 6, 8, 10 section of pipeline is fed through the middle of the second frame 138 and out the pipeline holes 104a, 104b of the machine 100. Again, this can be visually checked by the operator looking though the windows 108a, 108b. The enclosure 102 is now ready to receive another field joint 6, 8, 10 section of pipeline.

## Claims

1. A machine (100) for spraying a section of pipeline (2, 4), the machine comprising:
an enclosure (102) configured to surround the section of pipeline;
a frame (124, 138) rotatable about the section of pipeline in the enclosure;
rotating means (122, 128) operable to rotate the frame;
a water delivery arrangement (134a, 134b, 134c; 140a 140b, 140c mounted on the frame and rotatable therewith to spray water around the section of pipeline in the enclosure; **characterised in that** the machine further comprises
an air delivery arrangement (136a, 136b, 136c) mounted on the frame and rotatable therewith to spray air around the section of pipeline in the enclosure.

2. A machine (100) as claimed in claim 1, wherein the air delivery arrangement (136a, 136b, 136c) is rotationally displaced about the axis of rotation (A-A) of the frame from the water delivery arrangement.

3. A machine (100) as claimed in either of claims 1 or 2, wherein the water delivery arrangement comprises a plurality of water delivery manifolds (134a, 134b, 134c; 140a, 140b, 140c) each water delivery manifold being mounted at substantially equiangular intervals about the axis (A-A).

4. A machine (100) as claimed in any one of the previous claims, wherein the water delivery arrangement (140a, 140b, 140c) is capable of spraying water at between 50 and 150 Bar pressure, preferably at substantially 100 Bar pressure.

5. A machine (100) as claimed in any one of claims 1 to 3, wherein the water delivery arrangement (134a, 134b, 134c) is capable of spraying water at between 2 and 6 Bar pressure, preferably at substantially 4 Bar pressure.

6. A machine (100) as claimed in any one of claims 1 to 4, wherein the machine comprises a heater arrangement (142, 144) mounted on the frame (138) and rotatable therewith to heat a section of pipeline in the enclosure, and preferably wherein the heater arrangement comprises an induction heater arrangement (142, 144).

7. A machine (100) as claimed in claim 6, wherein the heater arrangement (142, 144) comprises a plurality of heaters each heater being mounted at angular intervals about the axis.

8. A machine (100) as claimed in any one of claims 1 to 3 or claim 5, wherein the water delivery arrangement (134a, 134b, 134c) is fluidly coupled to a source of water (300) cooled to below ten degrees Celsius.

9. A machine (100) as claimed in any one of the previous claims, wherein the air delivery arrangement (136a, 136b, 136c) is capable of spraying air at between 4 and 8 Bar pressure, preferably at substantially 6 Bar pressure.

10. A machine (100) as claimed in any one of the previous claims, wherein the air delivery arrangement comprises a plurality of air delivery manifolds (130a, 136b, 136c) each air delivery manifold being mounted at substantially equiangular intervals about the axis (A-A).

11. A machine (100) as claimed in any one of the previous claims, wherein the machine comprises
a hopper (110) for collecting matter from the enclosure (102).

12. A process for spraying a section of pipeline (2,4), the process comprising:
providing a machine (100) for spraying a section of pipeline, the machine having an enclosure (102), a rotatable frame (124,138), rotating means(122,128) operable to rotate the frame and a water delivery arrangement (134a, 134b, 134c) and an air delivery arrangement (136a, 136b, 136c) mounted on the frame and rotatable therewith;
disposing the frame about the section of pipeline;
surrounding a section of pipeline to be sprayed with the enclosure;
operating rotating means to rotate the frame;
directing one of the air delivery arrangement to spray air around the section of pipeline or the water delivery arrangement to spray water around the section of pipeline; **characterised in that** the process further comprises the step of
directing the other of the air delivery arrangement to spray air around the section of pipeline or the water delivery arrangement to spray water around the section of pipeline.

13. A process as claimed in claim 12, wherein the process comprises:
directing the air delivery arrangement (136a, 136b, 136c) to spray air around the section of pipeline for substantially one minute;
directing the water delivery arrangement (134a, 134b, 134c; 140a, 140b, 140c) to spray water around the section of pipeline for substantiaily three minutes; and optionally
directing the air delivery arrangement to spray air around the section of pipeline for up to one minute.

14. A process as claimed in either one of claims 12 and 13, wherein the air delivery arrangement (136a, 136b, 136c) is directed to spray air at between 4 and 8 Bar pressure and the water delivery arrangement (134a, 134b, 134c) is directed to spray water at between 2 and 6 Bar pressure.

15. A process as claimed in claim 12, wherein the process comprises:
directing the water delivery arrangement (140a, 140b, 140c) to spray water around the section of pipeline for substantially thirty seconds;
directing the air delivery arrangement (136a, 136b, 136c) to spray air around the section of pipeline for substantially one minute; and optionally
directing a heater arrangement (142, 144) mounted on the frame (138) and rotatable therewith to heat the section of pipeline, preferably to a temperature of between 90 and 130 degrees Celsius.

16. A process as claimed in claim 15, wherein the water delivery arrangement (140a, 140b, 140c) is directed to spray water at between 50 and 150 Bar pressure and the air delivery arrangement is directed to spray air at between 4 and 8 Bar pressure.

## Patentansprüche

1. Maschine (100) zum Besprühen eines Abschnitts einer Pipeline (2, 4), worin die Maschine umfasst:
ein Gehäuse (102), das dafür ausgelegt ist, den Pipelineabschnitt zu umgeben;
einen Rahmen (124, 138), der um den Pipelineabschnitt im Gehäuse drehbar ist;
Dreheinrichtung (122, 128), die zum Drehen des Rahmens betrieben werden kann;
eine Wasserzufuhranordnung (134a, 134b, 134c; 140a 140b, 140c), die auf dem Rahmen befestigt ist und damit drehbar ist, um Wasser rund um den Pipelineabschnitt im Gehäuse zu versprühen, **dadurch gekennzeichnet, dass** die Maschine ferner umfasst
eine Luftzufuhranordnung (136a, 136b, 136c), die auf dem Rahmen befestigt ist und damit drehbar ist, um Luft rund um den Pipelineabschnitt im Gehäuse zu versprühen.

2. Maschine (100) nach Anspruch 1, worin die Luftzufuhranordnung (136a, 136b, 136c) drehend um die Rotationsachse (A-A) des Rahmens von der Wasserzufuhranordnung verschoben wird.

3. Maschine (100) nach einem der Ansprüche 1 oder 2, worin die Wasserzufuhranordnung mehrere Wasserzufuhrverteiler (134a, 134b, 134c; 140a, 140b, 140c) umfasst, worin jeder Wasserzufuhrverteiler in im Wesentlichen gleichwinkeligen Intervallen um die Achse (A-A) befestigt ist.

4. Maschine (100) nach einem der vorherigen Ansprüche, worin die Wasserzufuhranordnung (140a, 140b, 140c) Wasser mit einem Druck zwischen 50 und 150 bar versprühen kann, vorzugsweise mit im Wesentlichen 100 bar Druck.

5. Maschine (100) nach einem der Ansprüche 1 bis 3, worin die Wasserzufuhranordnung (134a, 134b, 134c) Wasser mit einem Druck zwischen 2 und 6 bar versprühen kann, vorzugsweise mit im Wesentlichen 4 bar Druck.

6. Maschine (100) nach einem der Ansprüche 1 bis 4, worin die Maschine eine Heizeinrichtung (142, 144) umfasst, die auf dem Rahmen (138) befestigt ist und damit drehbar ist, um einen Pipelineabschnitt im Gehäuse zu erwärmen, und worin vorzugsweise die Heizanordnung eine Induktionsheizanordnung (142, 144) umfasst.

7. Maschine (100) nach Anspruch 6, worin die Heizanordnung (142, 144) mehrere Heizelemente umfasst, worin jedes Heizelement in Winkelintervallen um die Achse befestigt ist.

8. Maschine (100) nach einem der Ansprüche 1 bis 3 oder Anspruch 5, worin die Wasserzufuhranordnung (134a, 134b, 134c) fluidisch mit einer Quelle von Wasser (300) verbunden ist, die auf unter zehn Grad Celsius gekühlt wird.

9. Maschine (100) nach einem der vorherigen Ansprüche, worin die Luftzufuhranordnung (136a, 136b, 136c) Luft mit einem Druck zwischen 4 und 8 bar versprühen kann, vorzugsweise bei im Wesentlichen 6 bar Druck.

10. Maschine (100) nach einem der vorherigen Ansprüche, worin die Luftzufuhranordnung mehrere Luftzufuhrverteiler (136a, 136b, 136c) umfasst, worin jeder Luftzufuhrverteiler in im Wesentlichen gleichwinkeligen Intervallen um die Achse (A-A) befestigt ist.

11. Maschine (100) nach einem der vorherigen Ansprüche, worin die Maschine umfasst einen Einfülltrichter (110) zum Sammeln von Material aus dem Gehäuse (102).

12. Prozess zum Besprühen eines Pipelineabschnitts (2, 4), worin der Prozess umfasst:
Bereitstellen einer Maschine (100) zum Besprühen eines Pipelineabschnitts, worin die Maschine ein Gehäuse (102), einen drehbaren Rahmen (124, 138), eine Dreheinrichtung (122, 128), die betrieben werden kann, um den Rahmen und eine Wasserzufuhranordnung (134a, 134b, 134c) und eine Luftzufuhranordnung (136a, 136b, 136c) hat, die auf dem Rahmen befestigt ist und mit demselben gedreht werden kann;
Anordnen des Rahmens um den Pipelineabschnitt;
Umgeben eines Pipelineabschnitts, der besprüht werden soll, mit dem Gehäuse;
Betreiben der Dreheinrichtung zum Rotieren des Rahmens;
Ausrichten entweder der Luftzufuhranordnung zum Sprühen von Luft rund um den Pipelineabschnitt oder der Wasserzufuhranordnung zum Sprühen von Wasser rund um den Pipelineabschnitt; **dadurch gekennzeichnet, dass** der Prozess ferner den Schritt
des Richtens der anderen aus der Luftzufuhranordnung zum Sprühen von Luft rund um den Pipelineabschnitt oder der Wasserzufuhranordnung zum Sprühen von Wasser rund um den Pipelineabschnitt umfasst.

13. Prozess nach Anspruch 12, worin der Prozess umfasst:
Ausrichten der Luftzufuhranordnung (136a, 136b, 136c) zum Sprühen von Luft rund um den Pipelineabschnitt im Wesentlichen für eine Minute;
Ausrichten der Wasserzufuhranordnung (134a, 134b, 134c; 140a, 140b, 140c) zum Sprühen von Wasser rund um den Pipelineabschnitt im Wesentlichen für drei Minuten; und optional
Ausrichten der Luftzufuhranordnung zum Sprühen von Luft rund um den Pipelineabschnitt für bis zu einer Minute.

14. Prozess nach einem der Ansprüche 12 und 13, worin die Luftzufuhranordnung (136a, 136b, 136c) zum Sprühen von Luft bei 4 bis 8 bar Druck ausgerichtet ist und die Wasserzufuhranordnung (134a, 134b, 134c) zum Sprühen von Wasser bei 2 bis 6 bar ausgerichtet ist.

15. Prozess nach Anspruch 12, worin der Prozess umfasst:
Ausrichten der Wasserzufuhranordnung (140a, 140b, 140c) zum Sprühen von Wasser rund um den Pipelineabschnitt im Wesentlichen für dreißig Sekunden;
Ausrichten der Luftzufuhranordnung (136a, 136b, 136c) zum Sprühen von Luft rund um den Pipelineabschnitt im Wesentlichen für eine Minute; und optional Ausrichten einer Heizanordnung (142,144), die auf dem Rahmen (138) befestigt ist und mit demselben drehbar ist, um den Pipelineabschnitt zu erwärmen, vorzugsweise auf eine Temperatur zwischen 90 und 130 Grad Celsius.

16. Prozess nach Anspruch 15, worin die Wasserzufuhranordnung (140a, 140b, 140c) ausgerichtet ist, um Wasser bei 50 bis 150 bar Druck zu sprühen, und die Luftzufuhranordnung ausgerichtet ist, Luft bei 4 bis 8 bar Druck zu sprühen.

## Revendications

1. Machine (100) de pulvérisation sur une section de canalisation (2, 4), la machine comprenant :
une enceinte (102) configurée pour entourer la section de canalisation ;
un châssis (124, 138) pouvant tourner autour de la section de canalisation dans l'enceinte ;
des moyens rotatifs (122, 128) qui sont à même de faire tourner le châssis ;
un agencement de fourniture d'eau (134a, 134b, 134c ; 140a, 140b, 140c) monté sur le châssis et pouvant tourner avec celui-ci afin de pulvériser de l'eau autour de la section de canalisation dans l'enceinte ; **caractérisée en ce que** la machine comprend en outre :
un agencement de fourniture d'air (136a, 136b, 136c) monté sur le châssis et pouvant tourner avec celui-ci pour pulvériser de l'air autour de la section de canalisation dans l'enceinte.

2. Machine (100) selon la revendication 1, dans laquelle l'agencement de fourniture d'air (136a, 136b, 136c) est déplacé à rotation autour de l'axe de rotation (A-A) du châssis depuis l'agencement de fourniture d'eau.

3. Machine (100) selon l'une quelconque des revendications 1 ou 2, dans laquelle l'agencement de fourniture d'eau comprend une pluralité de distributeurs de fourniture d'eau (134a, 134b, 134c ; 140a, 140b, 140c), chaque distributeur de fourniture d'eau étant monté à intervalles sensiblement équi-angulaires autour de l'axe (A-A).

4. Machine (100) selon l'une quelconque des revendications précédentes, dans laquelle l'agencement de fourniture d'eau (140a, 140b, 140c) est à même de pulvériser de l'eau à une pression comprise entre 50 et 150 bars, de préférence à une pression de sensiblement 100 bars.

5. Machine (100) selon l'une quelconque des revendications 1 à 3, dans laquelle l'agencement de fourniture d'eau (134a, 134b, 134c) est à même de pulvériser de l'eau à une pression comprise entre 2 et 6 bars, de préférence à une pression sensiblement de 4 bars.

6. Machine (100) selon l'une quelconque des revendications 1 à 4, dans laquelle la machine comprend un agencement de chauffage (142, 144) monté sur le châssis (138) et pouvant tourner avec celui-ci pour chauffer une section de canalisation dans l'enceinte, de préférence dans laquelle l'agencement de chauffage comprend un agencement de chauffage par induction (142, 144).

7. Machine (100) selon la revendication 6, dans laquelle l'agencement de chauffage (142, 144) comprend une pluralité de dispositifs de chauffage, chaque dispositif de chauffage étant monté à intervalles angulaires autour de l'axe.

8. Machine (100) selon l'une quelconque des revendications 1 à 3 ou la revendication 5, dans laquelle l'agencement de fourniture d'eau (134a, 134b, 134c) est couplé en mode fluidique à une source d'eau (300) refroidie en dessous de dix degrés Celsius.

9. Machine (100) selon l'une quelconque des revendications précédentes, dans laquelle l'agencement de fourniture d'air (136a, 136b, 136c) est capable de pulvériser de l'air à une pression comprise entre 4 et 8 bars, de préférence à une pression sensiblement de 6 bars.

10. Machine (100) selon l'une quelconque des revendications précédentes, dans laquelle l'agencement de fourniture d'air comprend une pluralité de distributeurs de fourniture d'air (136a, 136b, 136c), chaque distributeur de fourniture d'air étant monté à intervalles sensiblement équi-angulaires autour de l'axe (A-A).

11. Machine (100) selon l'une quelconque des revendications précédentes, dans laquelle la machine comprend une trémie (110) pour recueillir des matières de l'enceinte (102).

12. Procédé de pulvérisation sur une section de canalisation (2, 4), le procédé comprenant :
la fourniture d'une machine (100) de pulvérisation sur une section de canalisation, la machine ayant une enceinte (102), un châssis rotatif (124, 138), des moyens rotatifs (122, 128) qui sont à même de faire tourner le châssis et un agencement de fourniture d'eau (134a, 134b, 134c) et un agencement de fourniture d'air (136a, 136b, 136c) montés sur le châssis et pouvant tourner avec celui-ci ;
la disposition du châssis autour de la section de canalisation ;
l'enveloppement d'une section de canalisation à pulvériser par l'enceinte ;
la commande des moyens rotatifs pour faire tourner le châssis ;
la commande d'un de l'agencement de fourniture d'air pour pulvériser de l'air autour de la section de canalisation ou de l'agencement de fourniture d'eau pour pulvériser de l'eau autour de la section de canalisation ; **caractérisé en ce que** le procédé comprend en outre l'étape consistant à :
commander l'autre de l'agencement de fourniture d'air pour pulvériser de l'air autour de la section de canalisation ou de l'agencement de fourniture d'eau pour pulvériser de l'eau autour de la section de canalisation.

13. Procédé selon la revendication 12, dans lequel le procédé comprend :
la commande de l'agencement de fourniture d'air (136a, 136b, 136c) pour pulvériser de l'air autour de la section de canalisation pendant sensiblement une minute ;
la commande de l'agencement de fourniture d'eau (134a, 134b, 134c ; 140a, 140b, 140c) pour pulvériser de l'eau autour de la section de canalisation pendant sensiblement trois minutes ; et éventuellement
la commande de l'agencement de fourniture d'air pour pulvériser de l'air autour de la section de canalisation pendant jusqu'à une minute.

14. Procédé selon l'une quelconque des revendications 12 et 13, dans lequel l'agencement de fourniture d'air (136a, 136b, 136c) est commandé pour pulvériser de l'air à une pression comprise entre 4 et 8 bars et l'agencement de fourniture d'eau (134a, 134b, 134c) est commandé pour pulvériser de l'eau à une pression comprise entre 2 et 6 bars.

15. Procédé selon la revendication 12, dans lequel le procédé comprend :
la commande de l'agencement de fourniture d'eau (140a, 140b, 140c) pour pulvériser de l'eau autour de la section de canalisation pendant sensiblement trente secondes;
la commande de l'agencement de fourniture d'air (136a, 136b, 136c) pour pulvériser de l'air autour de la section de canalisation pendant sensiblement une minute ; et éventuellement
la commande d'un agencement de chauffage (142, 144) monté sur le châssis (138) et pouvant tourner avec celui-ci pour chauffer la section de canalisation, de préférence à une température comprise entre 90 et 130 degrés Celsius.

16. Procédé selon la revendication 15, dans lequel l'agencement de fourniture d'eau (140a, 140b, 140c) est commandé pour pulvériser de l'eau à une pression comprise entre 50 et 150 bars et l'agencement de fourniture d'air est commandé pour pulvériser de l'air à une pression comprise entre 4 et 8 bars.
